(19) Europäisches Patentamt
European Patent Office
Office européen des brevets

(11) **EP 1 686 576 A2**

(12) **EUROPÄISCHE PATENTANMELDUNG**

(43) Veröffentlichungstag:
02.08.2006 Patentblatt 2006/31

(51) Int Cl.:
*G11B 7/26* (2006.01)　　　*B29C 45/26* (2006.01)
*B29C 33/30* (2006.01)　　*B29D 17/00* (2006.01)
*B23B 51/00* (2006.01)

(21) Anmeldenummer: 06405017.2

(22) Anmeldetag: 18.01.2006

(84) Benannte Vertragsstaaten:
AT BE BG CH CY CZ DE DK EE ES FI FR GB GR HU IE IS IT LI LT LU LV MC NL PL PT RO SE SI SK TR
Benannte Erstreckungsstaaten:
AL BA HR MK YU

(30) Priorität: 27.01.2005 CH 1292005

(71) Anmelder: AWM Mold Tech AG
5630 Muri (CH)

(72) Erfinder: Gabriel, Markus
5022 Rombach (CH)

(74) Vertreter: Bremi, Tobias Hans et al
Isler & Pedrazzini AG
Postfach 6940
8023 Zürich (CH)

(54) **Verfahren und Vorrichtung zur Bearbeitung eines Informations- und/oder Strukturträgers für Spritzgussformen**

(57) Beschrieben wird ein Verfahren und eine Vorrichtung zur Nachbearbeitung eines scheibenförmigen Informations- und/oder Strukturträgers (19) für Spritzgussformen (10), beispielsweise einen Stamper für die Herstellung von CDs oder DVDs, welcher eine zentrale, im wesentlichen zylindrische Öffnung (56) aufweist, wobei der Informations-und/oder Strukturträger (19) in der Spritzgussform (10) durch eine durch die Öffnung (56) wenigstens teilweise hindurchtretende Haltevorrichtung (18), beispielsweise einen ringförmigen Stamperhalter, gehalten wird, und bei welchem die Information respektive Struktur im wesentlichen konzentrisch zu dieser Öffnung (56) auf einer der Kavität (25) der Spritzgussform (10) zugewandten Oberfläche (55) vorgesehen ist. Bei einem solchen Verfahren wird die im wesentlichen zylindrische Öffnung (56) auf wenigstens einer Seite an der Kante zu einer Oberfläche (55,57), vorzugsweise auf der die Information respektive Struktur tragenden Oberfläche abgefast (35), wodurch sich beim Einbau in die Spritzgussform eine Selbstzentrierung der Stamperplatte ergibt und eine im wesentlichen spaltfreie Halterung durch den Stamperhalter bei welcher am resultierenden Formling (CD/DVD) keine unerwünschten Grate oder Rillen entstehen und die Stamperplatte durch die Befestigung keine Spannungen erfährt.

Fig. 5

EP 1 686 576 A2

## Beschreibung

TECHNISCHES GEBIET

Die vorliegende Erfindung bezieht sich auf das Gebiet der Spritzgusstechnik. Sie betrifft insbesondere ein Verfahren und eine Vorrichtung zur Bearbeitung eines scheibenförmigen Informations- und/oder Strukturträgers (Stampers) für Spritzgussformen, insbesondere für CDs oder DVDs, welcher eine zentrale, im wesentlichen zylindrische Öffnung zur Halterung aufweist.

STAND DER TECHNIK

Zur Herstellung von optisch lesbaren Informationsträgern wie Audio-CDs, CD-ROMs, Video-CDs oder DVDs werden Spritzgusswerkzeuge eingesetzt, die mittels zweier gegenüberliegender, relativ zueinander beweglicher Spiegelplatten eine Kavität (Hohlraum der Spritzgussform) bilden. Auf einer der beiden Spiegelplatten ist üblicherweise ein dünner, scheibenförmiger Stamper lösbar befestigt, der beim Spritzgiessen des sich formenden Informationsträgers die die Information oder wenigstens Struktur enthaltenden Spuren einprägt. Es handelt sich somit bei diesem Informations- und/oder Strukturträger um ein 3D-Template oder Pressstempel, in welchem entweder die Rillenstruktur zur Einbettung des Farbstoffes bei beschreibbaren Medien als Negativ vorgesehen ist, oder in welchem sogar die gesamte Information, welche optisch ausgelesen wird, von nur lesbaren Medien durch die zusätzliche Strukturierung der Spuren als Negativ vorgesehen ist. Die im Stamper vorgesehenen Negativdaten werden im Spritzgussprozess vom Formling im Kunststoff übernommen.

Der Stamper wird im Spritzgusswerkzeug mit einem sogenannten Stamperhalter befestigt. Der Stamper verfügt dazu über eine zentrale Öffnung, in welche der Stamperhalter wenigstens teilweise eingreift. Beim Stamperhalter handelt es sich mit anderen Worten um ein im wesentlichen ringförmiges Element, welches, nachdem der Stamper auf die Spiegelplatte aufgesetzt wurde, durch dessen Öffnung hindurchgeführt und in der Spiegelplatte befestigt wird, wobei die Haltung durch Wechselwirkung des Aussendurchmessers der Stamperhalterung mit dem Innendurchmesser der Öffnung des Stampers erfolgt. Diese Halterung kann entweder formschlüssig durch Haltelippen am Stamperhalter erfolgen, oder kraftschlüssig durch Vakuum direkt an der Spiegelplatte bewirkt werden, wobei im letzteren Fall der Stamperhalter im wesentlichen eine Zentrierungsfunktion übernimmt.

Durch die zunehmend hohen Lese- und Schreibgeschwindigkeiten, welche mit so hergestellten Datenträgern erreicht werden sollen, wachsen auch die Anforderungen an die Exzentrizität (ECC). Die Exzentrizität ist definiert als Differenz der beiden Achsen von Mittelloch des Datenträgers und Informationsspur des Datenträgers. In Spezifikationen sind typischerweise folgende Masse einzuhalten

$$CD\text{-}A \qquad ECC < 70\mu m$$

$$DVD\text{-}R \qquad ECC < 20\mu m.$$

Die gesamte Exzentrizität ergibt sich durch Summierung der Abweichungen von Stamper, Werkzeugtoleranzen, sowie Ausweitungen der zentralen Öffnung des Stampers (u.a. Abnutzungseffekte bei seitlichen Kräften bei Gebrauch oder bei Montage).

Die Genauigkeit des Innendurchmessers der zentralen Öffnung des Stampers, welcher typischerweise aus Nickel oder einen Nickellegierung in einem fotochemischen Prozess hergestellt wird, ist entsprechend für die Exzentrizität entscheidend. Die zentrale Öffnung des Stampers wird durch Stanzen hergestellt. Beim Stanzvorgang dieser Öffnung entstehen materialtechnisch bedingt unterschiedliche Stanzzonen. Bei der Eintrittskante des Stanzwerkzeugs entsteht ein Radius oder eine leichte Abflachung oder ein Einzug, und an der Austrittkante entsteht ein kleiner Grat oder ein Ausbruch. Dazwischen liegt ein im wesentlichen zylindrischer Bereich.

Insbesondere die Grösse und Ausrichtung des im Eintrittsbereich gebildeten Radius/Einzuges lässt sich nur sehr schwierig kontrollieren und variiert in Abhängigkeit von Stanzstempel, Stamperhärte, Temperatur und Geschwindigkeit beim Stanzvorgang, Schutzlack, etc. Alle diese Effekte stehen einer präzisen Zentrierung am Innendurchmesser der zentralen Öffnung des Stampers im Wege.

Entsprechend besteht ein Bedürfnis, den Innendurchmesser des Stampers ohne grossen Aufwand möglichst präzise ausbilden zu können, um damit die Exzentrizität auf einem Minimum zu halten.

DARSTELLUNG DER ERFINDUNG

Der Erfindung liegt demnach die Aufgabe zugrunde, ein Verfahren sowie eine Vorrichtung zur präziseren Ausbildung der zentralen Öffnung eines Informations-und/oder Strukturträgers für Spritzgussformen zur Verfügung zu stellen, um die Exzentrizität eines damit gefertigten Datenträgers (CD, DVD) auf einem Minimum zu halten.

Insbesondere geht es darum, ein Verfahren zur Bearbeitung eines scheibenförmigen Informations- und/ oder Strukturträgers für Spritzgussformen, welcher eine zentrale, im wesentlichen' zylindrische Öffnung aufweist, vorzuschlagen, wobei es sich um einen Informations- und/oder Strukturträger handelt, welcher in der Spritzgussform durch eine durch die Öffnung wenigstens teilweise hindurchtretende Haltevorrichtung gehalten wird, und bei welchem die Information respektive Struktur im wesentlichen konzentrisch zu dieser Öffnung auf einer der Kavität der Spritzgussform zugewandten Oberfläche vorgesehen ist.

Die Lösung dieser Aufgabe wird dadurch erreicht, dass die im wesentlichen zylindrische Öffnung auf wenigstens einer Seite an der Kante zu einer Oberfläche abgefast wird. Es wird mit anderen Worten bei bereits vorliegender, normalerweise in einem Stanzvorgang hergestellter zentraler Öffnung des Informations- und/oder Strukturträgers eine Nachbearbeitung vorgenommen, indem eine der Kanten zwischen Oberfläche und zylindrischer Mantelfläche der zentralen Öffnung konisch ausgebildet wird.

Der Kern der Erfindung besteht somit darin, primär nicht den Stanzvorgang an sich zu verbessern, sondern die beim Stanzvorgang entstehenden Unzulänglichkeiten in einem Nachbearbeitungsschritt auszumerzen. Dabei wird eine Nachbearbeitung gewählt, welche eine Halterung durch die zentrale Öffnung erlaubt, welche eine Selbstzentrierung des Informations- und/oder Strukturträgers bei der Befestigung in der Spritzgussform bewirkt, und welche somit eine Verbesserung der Werte der Exzentrizität nach sich zieht. Es ist somit überraschenderweise sehr einfach möglich, die beim Stanzvorgang entstehenden unkontrollierbaren Variabilitäten durch einen einfachen und verlässlichen Schritt der Nachbearbeitung zu beheben.

Gemäss einer ersten bevorzugten Ausführungsform wird die Kante durch Materialabtragung umlaufend oder abschnittsweise abgefast. Die Materialabtragung verhindert, dass wesentliche Veränderungen in der Materialstruktur auftreten, welche zu Spannungen und entsprechend zu zusätzlichen Exzentrizitäten oder Verschleisserscheinungen führen könnten.

Die Fase oder Abschrägung kann an der Kante zwischen der zylindrischen Öffnung und der der Kavität der Spritzgussform abgewandten Oberfläche des Informations- und/oder Strukturträgers ausgebildet sein. Dann findet der Effekt der Selbstzentrierung beispielsweise statt, wenn der Informations- und/oder Strukturträger an der Spiegelplatte über eine Vakuumsbefestigung gehalten wird. Eine Halterungswirkung auf der Spiegelplatte wird aber nicht erzielt, wenn nicht zusätzliche Mittel vorgesehen werden.

Bevorzugtermassen wird die Fase aber alternativ oder zusätzlich an der Kante zwischen der zylindrischen Öffnung und der die Information respektive Struktur tragenden Oberfläche erzeugt. So kann ein entsprechend ausgebildeter Stamperhalter, ohne dabei Spannungen oder Materialverschiebungen auszulösen, in diese konische Flanke eingeführt werden und dabei den Informations- und/oder Strukturträger einerseits auf der Spiegelplatte befestigen und andererseits diesen auch optimal zentrieren.

Gemäss einer weiteren bevorzugten Ausführungsform handelt es sich beim Informations-und/oder Strukturträger um einen Stamper für die Herstellung eines optischen Datenträgers, insbesondere einer CD oder DVD, und es handelt sich bei der Spritzgussform um ein Spritzgusswerkzeug für die Herstellung von scheibenförmigen Informationsträgern, insbesondere in Form von CDs und/oder DVDs. Das Spritzgusswerkzeug umfasst zur Bildung einer Kavität eine erste und eine zweite Spiegelplatte, die einander gegenüberliegen und zum Öffnen und Schliessen der Form relativ zueinander beweglich sind, sowie bevorzugt einen Formring, welcher die erste Spiegelplatte konzentrisch umschliesst und die Kavität zum äusseren Rand hin abschliesst und relativ zur ersten Spiegelplatte beweglich ist.

Bevorzugtermassen verfügt der Stamper über eine Dicke (h) im Bereich von 0.2-0.5 mm, vorzugsweise im Bereich von 0.25-0.35 mm. Normalerweise ist der Stamper aus reinem Nickel oder einer Nickellegierung gefertigt.

Gemäss einer weiteren bevorzugten Ausführungsform wird die Fase umlaufend (durch Materialabtragung) abgefast und die Flanke der Fase schliesst mit der Normalen zum Stamper einen Winkel von 5 - 60°, vorzugsweise von 7-20°, und insbesondere bevorzugt von 10-15° ein. Die Tiefe der Fase liegt z.B. im Bereich von 0.1-0.3 mm, vorzugsweise im Bereich von 0.15-0.25 mm. Das Verhältnis von Tiefe der Fase zu Dicke des Stampers liegt zum Beispiel im Bereich von 0.1-0.9, bevorzugt von 0.25-0.5, und insbesondere bevorzugt von 0.6-0.7. Die Ausdehnung der Fase in radialer Richtung (Weite) beträgt vorzugsweise 0.03 - 0.1 mm, insbesondere 0.05 - 0.08 mm.

Gemäss einer weiteren bevorzugten Ausführungsform des erfindungsgemässen Verfahrens erfolgt das Abfasen, indem ein Schneidkopf mit mehreren im wesentlichen konisch angeordneten Schneidkanten, insbesondere in Form eines Kegelsenkers, oder mit einer konischen Schleifoberfläche konzentrisch und kontrolliert in die Öffnung des Struktur- und/oder Informationsträgers bis zu einem definierten Anschlag geführt wird, und dadurch die Fase durch Materialabtragung erzeugt wird, wobei insbesondere bevorzugt die Materialabtragung manuell erfolgt, das heisst die Drehung des Schneidkopfes erfolgt manuell, es ist aber auch möglich, dies über einen Motor zu bewirken.

Besonders einfach lässt sich das beschriebene Verfahren durchführen, wenn eine Vorrichtung wie folgt dafür verwendet wird: eine Vorrichtung zur Bearbeitung eines scheibenförmigen Informations- und/oder Strukturträgers für Spritzgussformen, welche erste Mittel zur kontrollierten Halterung des Informations- und/oder Strukturträgers aufweist, und welche ein Schleif- und/oder Schneidwerkzeug aufweist, welches über zweite Mittel konzentrisch in die zentrale Öffnung des gehaltenen Informations-und/oder Strukturträgers geführt werden kann. Dabei wird über eine Drehung des Schleif- und/oder Schneidwerkzeugs die im wesentlichen zylindrische Öffnung auf wenigstens einer Seite an der Kante zu einer Oberfläche abgefast, das heisst die Kante wird bevorzugt umlaufend abgeschrägt.

Eine erste bevorzugte Ausführungsform der Vorrichtung ist dadurch gekennzeichnet, dass es sich bei den ersten Mitteln um eine Schneidplatte handelt, in welcher Halterungsmittel für den Informations- und/oder Strukturträger angeordnet sind, wobei es sich bei diesen Halterungsmitteln insbesondere bevorzugt um Magnete und/oder Positionierungsrippen (beispielsweise wenigstens teilweise umlaufend um die Aussenkante des Stampers) und/oder Vakuumansaugvorrichtungen handelt.

Eine weitere bevorzugte Ausführungsform der erfindungsgemässen Vorrichtung ist dadurch gekennzeichnet, dass es sich bei den zweiten Mitteln um eine mit den ersten Mitteln fest oder drehbar verbundene, durch die zentrale Öffnung konzentrisch hindurchtretende, senkrecht zur Ebene des Informations- und/oder Strukturträgers angeordnete Führungssäule handelt, und dass das Schleif- und/oder Schneidwerkzeug über eine entsprechende im wesentlichen zylindrische Ausnehmung oder Bohrung in der Spitze verfügt, in welche die Führungssäule, gegebenenfalls unter Zwischenschaltung von die Reibung vermindernden Lagern, bevorzugt in Form eines Kugelkäfigs, derart eingeführt ist, dass das Schleif- und/oder Schneidwerkzeug konzentrisch zur zentralen Öffnung drehbar ist.

Alternativ, gewissermassen kinematisch vertauscht, ist es möglich, eine Vorrichtung vorzusehen, welche dadurch gekennzeichnet ist, dass es sich bei den zweiten Mitteln um eine mit dem Schleif- und/oder Schneidwerkzeug fest oder drehbar und koaxial verbundene, durch die zentrale Öffnung konzentrisch hindurchtretende Führungssäule handelt, und dass das erste Mittel über eine entsprechende im wesentlichen zylindrische, senkrecht zur Ebene des Informations- und/oder Strukturträgers angeordnete Ausnehmung oder Bohrung verfügt, in welche die Führungssäule, gegebenenfalls unter Zwischenschaltung von die Reibung vermindernden Lagern, bevorzugt in Form eines Kugelkäfigs, derart eingeführt ist, dass das Schleif- und/oder Schneidwerkzeug konzentrisch zur zentralen Öffnung drehbar ist.

Bevorzugtermassen handelt es sich beim Schneidwerkzeug um einen Kegel- und/oder Entgratersenker, welcher insbesondere bevorzugt über wenigstens drei, vorzugsweise vier bis acht Schneiden verfügt. Weiterhin ist das Schleif- und/oder Schneidwerkzeug vorzugsweise zur manuellen Betätigung für die Materialabtragung am Stamper ausgelegt.

Weitere bevorzugte Ausführungsformen sind in den abhängigen Ansprüchen beschrieben.

KURZE ERLÄUTERUNG DER FIGUREN

Die Erfindung soll nachfolgend anhand von Ausführungsbeispielen im Zusammenhang mit den Zeichnungen näher erläutert werden. Es zeigen:

Fig. 1    in einem schematischen und vereinfachten Längsschnitt ein Spritzgusswerkzeug nach dem Stand der Technik;

Fig. 2 a) - c)    verschiedene Ausschnitte gem. Kreis A wie in Figur 1 angegeben für unterschiedliche Möglichkeiten der Befestigung des Stampers in der Spritzgussform;

Fig. 3    wiederum einen Ausschnitt gemäss Kreis A in Figur 1 für eine Halterung unter Verwendung eines konischen Stamperhalters mit einem abgefasten Stamper;

Fig. 4    wiederum einen Ausschnitt gemäss Kreis A in Figur 1 für eine Halterung unter Verwendung eines konischen Stamperhalters mit Haltelippe mit einem abgefasten Stamper; und

Fig. 5    unterschiedliche Ansichten einer Vorrichtung zur Nachbearbeitung eines Stampers, a) perspektivische Ansicht, b) Explosionsdarstellung, c) Schnitt gem. A-A in d), Aufsicht auf die Schneidplatte, e) Schnitt gem. B-B in d).

WEGE ZUR AUSFÜHRUNG DER ERFINDUNG

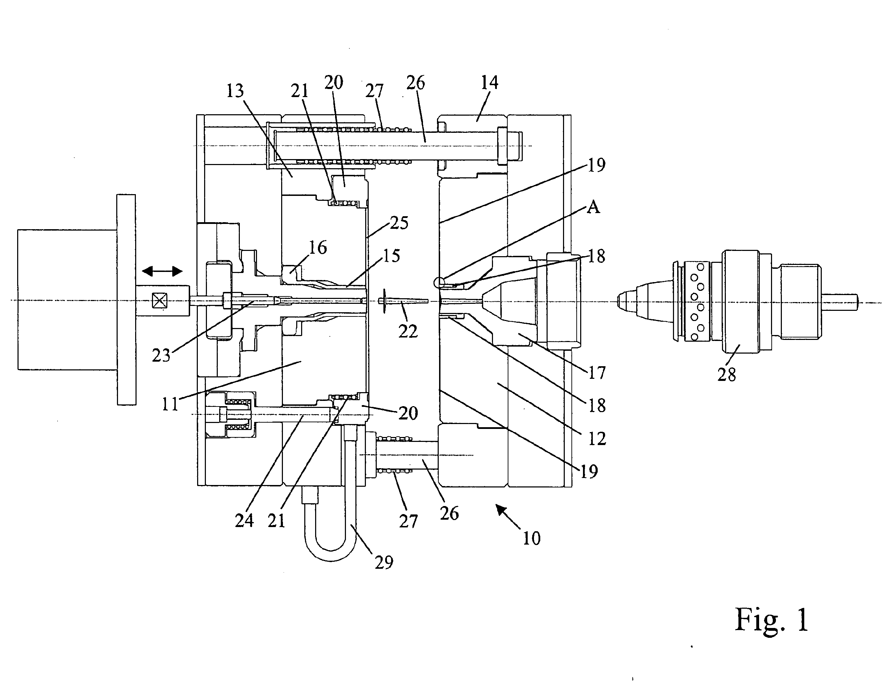

In Fig. 1 ist in einem Längsschnitt ein Spritzgusswerkzeug nach dem Stand der Technik, wie er beispielsweise in der EP-A1-1 120 221 festgehalten ist, schematisch wiedergegeben. Die Figur ist dabei insoweit vereinfacht, als auf die Darstellung der notwendigen Verschraubungen, Federn, Dichtungen und Bedienelemente etc. verzichtet worden ist.

Das im geöffneten Zustand gezeigte Spritzgusswerkzeug 10 umfasst als zentrale Bestandteile eine erste (linke) Spiegelplatte 11, eine zweite (rechte) Spiegelplatte 12 und einen die erste Spiegelplatte 11 konzentrisch umschliessenden Formring (venting ring) 20, die zusammen, wenn die Form geschlossen wird, die Kavität 25 bilden. Die Spiegelplatten 11, 12 sind jeweils in einen sie konzentrisch umgebenden Zentrierring 13 bzw. 14 eingepasst. Die Information wird beim Spritzen in das Spritzgussteil (die CD/DVD) mittels eines Stampers 19 eingeprägt, der als dünne Scheibe an der Formfläche der zweiten Spiegelplatte 12 anliegt und im Zentrum durch einen buchsenförmigen Stamperhalter 18 gehalten wird. Für den Anschluss des Spritzgusswerkzeuges 10 an die Düse 28 der Spritzgussmaschine ist eine durch das Zentrum der zweiten Spiegelplatte 12 bis in die Kavität 25 reichende Angussbuchse 17 vorgesehen, die sich konisch nach aussen hin öffnet.

Der Angussbuchse 17 gegenüber sind konzentrisch ineinander liegend und (angedeutet durch die Doppelpfeile) relativ zueinander beweglich eine Ausstosshülse 16, eine Stanze 15 und ein Angussausstosser 23 angeordnet. Mit dem Angussausstosser 23 kann der in der inneren Bohrung der Angussbuchse 17 verbleibende Anguss 22 (zur Illustration in der Mitte der geöffneten Form dargestellt) ausgestossen werden. Mit der Stanze 15 wird die zentrale Öffnung in der gespritzten CD resp. DVD ausgestanzt. Mit der Ausstosshülse 16 schliesslich kann die fertige CD nach dem Öffnen der Kavität 25 ausgestossen werden.

Der Formring 20 ist im Zentrierring 13 verschiebbar gelagert und wird durch Federn in Richtung auf die zweite Spiegelplatte 12 gedrückt. Er kann über ein pneumatisch angetriebenes Betätigungselement 24 entlastet werden. Der Formring 20 liegt mit seiner Innenseite nicht direkt an der Aussenseite der ersten Spiegelplatte 11 an, sondern ist von dieser durch einen Kugelkäfig 21 getrennt, der konzentrisch auf der Aussenseite der ersten Spiegelplatte 11 in einem dafür vorgesehenen Absatz sitzt. Der Kugelkäfig 21 hat im wesentlichen die Form eines Hohlzylinders. Er bildet damit für den aus Stahl bestehenden Formring 20 und die aus Stahl bestehende erste Spiegelplatte 11 ein Gleitlager.

Die zwei Hälften der Spritzgussform 10 sind durch Führungssäulen 26 (normalerweise vier Stück) verschieblich zueinander gelagert, wobei für eine gute Verschiebbarkeit diese Führungssäulen 26 durch Kugelkäfige 27 in entsprechenden Ausnehmungen gelagert sind. Die Spiegelplatten 11 respektive 12 sowie gegebenenfalls auch der Ventingring 20 können mit Mitteln zur Temperierung oder auch mit Vakuum versorgt werden, und dies ist schematisch für den Ventingring 20 durch die Medienzuführungsleitung 29 dargestellt.

Im Zusammenhang mit einem solchen Spritzgusswerkzeug 10 soll nun an Hand des kreisförmigen Ausschnittes A, wie in Figur 1 dargestellt, die Erfindung näher erläutert werden. Der Kreis A in Figur 1 spezifiziert die Region, bei welcher der Stamperhalter 18 in die zentrale Öffnung der Stamperplatte eingreift und den Stamper 19 in der Spritzgussform fixiert oder wenigstens zentriert.

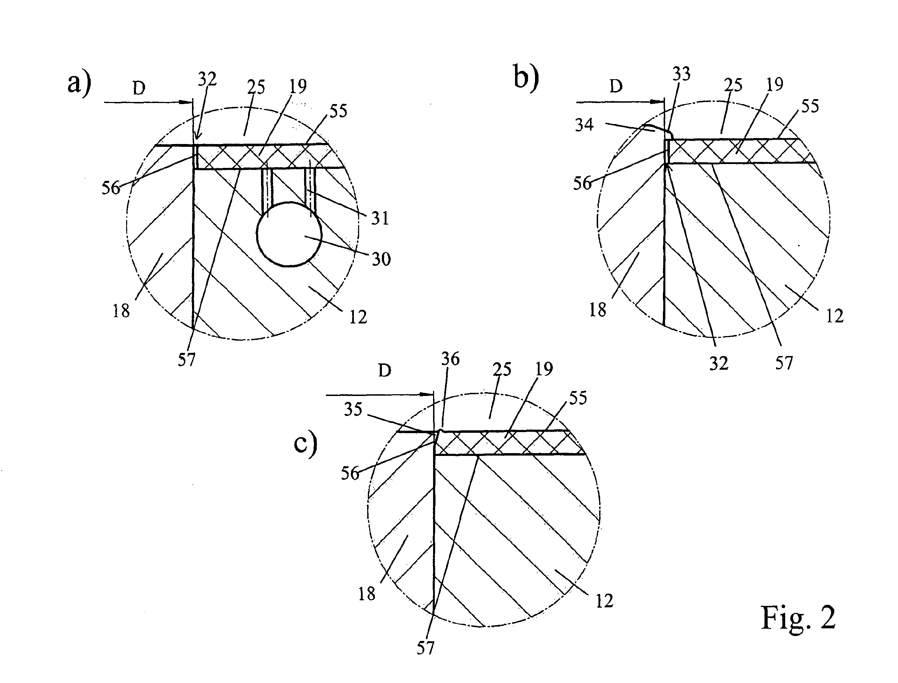

Die Figuren 2-4 zeigen den Ausschnitt A wie in Figur 1 dargestellt im Detail für unterschiedliche Ausbildungen von Stamperhalter 18 und/oder Spiegelplatte 12 und/oder Stamper 19.

In Figur 2 sind unterschiedliche Befestigungsmöglichkeiten für die Stamperplatte 19 angegeben, bei welchen ein jeweils Stamper 19 verwendet wird, welcher nicht speziell nachbearbeitet wurde, das heisst welcher über eine zentrale Öffnung 56 verfügt, welche in einem einfachen Stanzprozess hergestellt worden ist. Die zentrale Öffnung 56 ist somit im wesentlichen zylindrisch, abgesehen von den eingangs erwähnten, beim Stanzprozess erzeugten Deformationen in den Randbereichen.

Figur 2a) zeigt die Möglichkeit, den Stamper 19 im wesentlichen mit dem Stamperhalter 18 nur zu zentrieren, und die eigentliche Fixierung auf der Spiegelplatte 12 über eine Vakuumansaugung zu bewirken. Dazu verfügt die Spiegelplatte 12 über wenigstens einen Vakuumkanal 30, welcher über Ansaugöffnungen 31 zur Oberfläche der Spiegelplatte 12 geöffnet ist. Der Stamper 19 liegt mit seiner unteren Oberfläche 57, welche nicht über eine dreidimensionale Struktur oder Information verfügt, auf der Oberfläche der Spiegelplatte 12 auf, und wird durch ein Anlegen von Vakuum im Kanal 30 auf der Spiegelplatte gehalten.

Der Aussendurchmesser D des Stamperhalters 18 beträgt beispielsweise 22 mm, wobei eine Toleranz im Bereich von + 0.0 mm respektive - 0.005 / - 0.01 mm zugelassen wird. Der Innendurchmesser der zentralen Öffnung 56 des Stampers wird ebenfalls auf 22 mm ausgelegt, wobei aber aus Sicherheitsgründen (der Durchmesser der zentralen Öffnung darf auf keinen Fall im Rahmen der Toleranzen geringer sein als der Aussendurchmesser des Stamperhalters 18) hier die Toleranzen auf einen Bereich von + 0.01 mm und - 0.0 mm ausgelegt werden. Dadurch ergibt sich ein Spiel 32 im Bereich der zentralen Öffnung 56, welches im Bereich von 0.005-0.020 mm liegt, und welches letzten Endes einer qualitativ hoch stehenden Exzentrizität im Wege steht.

Selbst bei einer genauen zentralen Öffnung 56 des Stampers kann nämlich infolge des Spiels 32 der gesamte Stamper und damit auch die die Information konzentrisch zur zentralen Öffnung 56 enthaltende Oberfläche 55 des Stampers 19 im Rahmen dieser Toleranz verschoben werden und trägt somit zur Exzentrizität des am Ende erzeugten Datenträgers bei. Problematisch an dieser Lösung ist auch, dass in der Spiegelplatte 12 zur Befestigung solche Vakuumkanäle 30 vorgesehen werden müssen. Da in der Spiegelplatte 12 aber zur Temperierung bereits Kanäle für Temperierungsmittel erforderlich sind, ergeben sich durch das Erfordernis der Kanäle 30 schwierige Bedingungen in der Spiegelplatte 12.

Eine Alternative ist in Figur 2b) dargestellt. Hier verfügt der Stamperhalter über eine Haltelippe 33, welche den Stamper 19, der im Prinzip gleich ausgebildet ist wie der Stamper, welcher bereits im Zusammenhang mit Figur 2a) beschrieben wurde, von oben greift. Entsprechend wird der Stamper 19 durch diese Haltelippe 33 auf der Spiegelplatte 12 fixiert und eine Vakuumsbefestigung, wie sie in Figur 2a) vorgesehen werden muss, erübrigt sich, könnte aber dennoch zur Unterstützung hinzugezogen werden. Eine Halterung unter Verwendung einer typischerweise umlaufenden Haltelippe 33 birgt aber folgenden Nachteile: Erstens muss eine leichte Erhöhung 34 im Bereich dieser Haltelippe 33 in Kauf genommen werden. Im Zusammenhang mit der Herstellung von Datenträgern, bei welchen zwei Hälften zusammen geklebt werden müssen (zum Beispiel DVD) kann die im Formling durch diese Erhöhung 34 entstehende umlaufende Nut zum Auffangen von Klebstoff verwendet werden (sog. bonding groove), ansonsten ist sie aber nicht wirklich nutzbringend und stört beim vollflächigen Bedrucken des Datenträgers. Ausserdem gibt es auch hier das Problem des Spiels 32. Es kann zwar durch die Halterung 33 teilweise vermieden werden, dass, wenn der Stamper 19 einmal eingesetzt ist, ein Verschieben im Rahmen dieses Spiels 32 stattfindet, die im Rahmen der Montage des Stampers 19 generierte Exzentrizität hingegen bleibt auch bei dieser Befestigungsmöglichkeit bestehen. Zudem handelt es sich bei der Haltelippe 33 um ein empfindliches Element (die Haltelippe 33 steht nur um circa 0.2 - 0.3 mm vor), welches einerseits präzise gefertigt werden muss, und welches andererseits unter Umständen abbrechen kann.

Eine weitere Möglichkeit ist in Figur 2c) dargestellt. Hier wird ein Stamperhalter 18 verwendet, welcher an seiner oberen Aussenkante leicht konisch erweiternd ausgebildet ist. Die so auftretende Abschrägung 35 wird mit Gewalt in die zentrale Öffnung eines Stampers 19 mit zylindrischer zentraler Öffnung 56 eingepresst, wenn der Stamper in der Spritzgussform befestigt wird. Dabei findet eine Deformation des Stampers 19 im Bereich der zentralen Öffnung 56 statt, und da das gepresste Material keine andere Ausweichmöglichkeit hat, findet eine Aufwerfung 36 in die Kavität 25 hinein statt. Diese Befestigungsmöglichkeit erniedrigt zwar die Exzentrizität, welche aufgrund des Spiels 32 auftritt, in einem gewissen Masse, führt aber andererseits dazu, dass im Formling aufgrund der Aufwerfung 36 schlecht kontrollierbare Rillen, Nuten oder Grate entstehen, welche haptisch unerwünscht sind, und bei einem Verkleben oder einem Bedrucken stören können. Ausserdem ergeben sich durch die gewaltsame Befestigung Spannungen und Deformationen im Stamper, was wiederum zur Exzentrizität beiträgt und die Qualität der erzeugten Datenträger reduzieren kann.

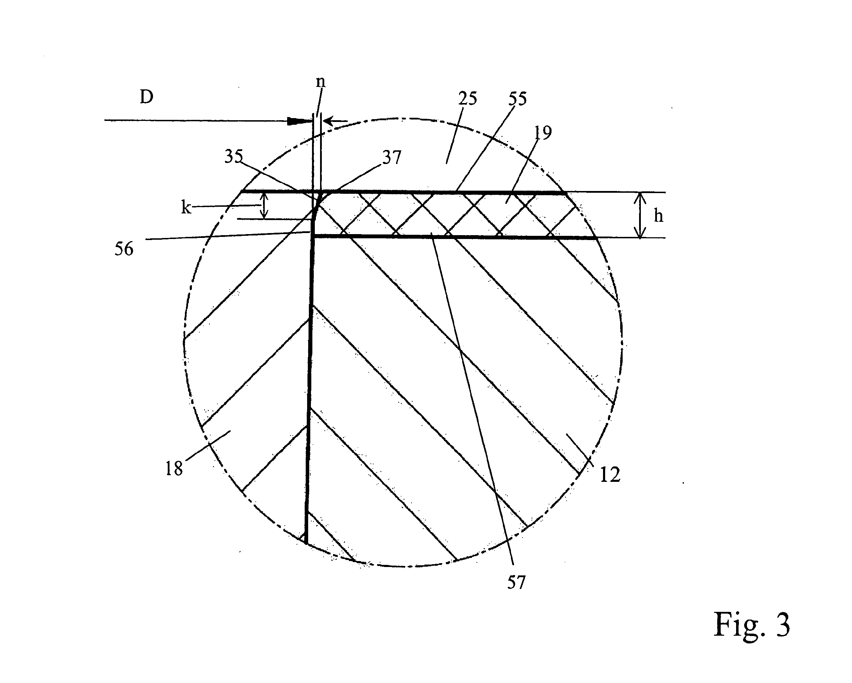

In Figur 3 ist nun dargestellt, wie ein entsprechend der Erfindung einer Nachbehandlung respektive Nachbearbeitung unterzogener Stamper unter Verwendung ungefähr eines Stamperhalters 18, wie er in Figur 2c) dargestellt ist, auf der Spiegelplatte 12 befestigt werden kann. Hierbei wird der Stamper 19 vor dem Einsetzen mit einer konischen Abschrägung oder Fase 37 versehen, zum Beispiel mit einem Werkzeug, wie es weiter unten angegeben ist, das heisst unter Materialabtragung. Die Abschrägung 37 des Stampers 19 ist im wesentlichen der Abschrägung 35 des Stamperhalters 18 angepasst.

Mit anderen Worten wird z.B. bei einer Höhe h des Stampers von 0.3 mm die Abschrägung 37 über eine Tiefe k von 0.2 mm ausgeführt, wobei die Abschrägung 37 eine Weite n in radialer Richtung von 0.06 mm aufweist. Durch die vorgängige Bearbeitung der oberen Kante, das heisst der Kante zwischen der inneren Mantelfläche der zentralen Öffnung 56 des Stampers und der die Information tragenden Oberfläche 55 des Stampers 19, entstehen bei der Befestigung keine Spannungen mehr, und die endgültige Exzentrizität kann so verbessert werden. Zudem ergibt sich aufgrund der wechselseitigen konischen Ausbildung von Stamperhalter 18 und Stamper 19 eine gegenseitige Zentrierungswirkung bei der Montage, was zu einer optimalen Exzentrizität weiter beiträgt.

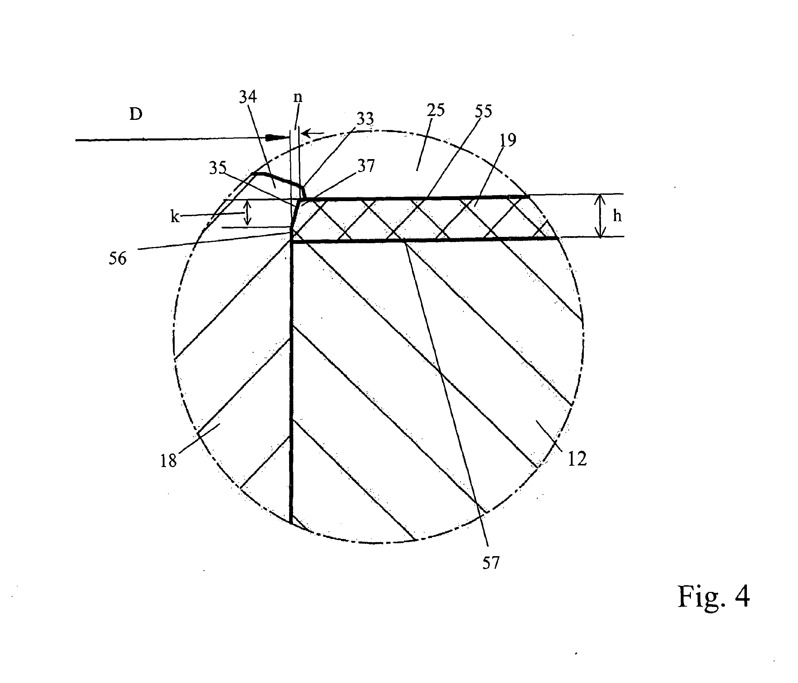

In Figur 4 ist eine analoge Ausbildung für den Fall einer zusätzlichen Haltelippe 33 abgebildet. Es wird dabei ein vorbearbeiteter Stamper 19, wie er im Zusammenhang mit Figur 3 beschrieben wurde, eingesetzt. Der Stamperhalter verfügt hier über eine Abschrägung 35 und gleichzeitig aber auch über eine Haltelippe 33. Die Haltelippe steht nochmals weiter über den Stamper 19 hinaus und befestigt diesen weiter auf der Spiegelplatte 12. Der Vorsprung der Haltelippe 33 über den Stamper 19 hinaus beträgt nochmals etwa 0.06 mm, was in einem gesamten Vorsprung der Haltelippe von circa 0.15 mm resultiert, respektive in einem Aussendurchmesser der Haltelippe von circa 22.3 mm. Die Kombination der Haltelippe 33 mit einer konischen Ausbildung 35 weist einerseits die Vorteile auf, wie sie bereits im Zusammenhang mit Figur 3 beschrieben wurden, andererseits aber noch den zusätzlichen Vorteil, dass die Haltelippe 33 im Vergleich zu einem Stamperhalter wie in Figur 2b dargestellt wesentlich besser von unten abgestützt ist und somit mechanisch belastbarer ist.

Die im Zusammenhang mit den Figuren 3 und 4 beschriebene Abschrägung 37 des Stampers kann auf unterschiedliche Weisen hergestellt werden. Es ist beispielsweise möglich, das Stanzwerkzeug, welches beim Stanzen der zentralen Öffnung 56 des Stampers 19 verwendet wird, mit einer entsprechenden Flanke zu versehen. Hierbei treten aber wiederum Materialverschiebungen auf, welche ähnlich sind, wie jene, welche bereits im Zusammenhang mit der Figur 2c) beschrieben wurden, und welche entsprechend nachteilige Wirkungen zeigen können. Auch ist es möglich, nach dem Stanzen in einem nachgeschalteten Umformprozess die Flanke 37 zu erzeugen. Da ein solcher Umformprozess aber spanlos ist, und entsprechend wiederum Material verschoben wird, ergeben sich ähnliche Probleme.

Bevorzugtermassen findet entsprechend eine Nachbearbeitung statt, bei welcher Material schonend abgetragen wird. Dies typischerweise spanabhebend, und entweder unter Verwendung eines Schleifwerkzeugs oder eines Schneidwerkzeugs, wobei es sich bei letzterem beispielsweise im wesentlichen um einen Kegelsenker handeln kann, welcher nur bis zu einer bestimmten Anschlagsposition in die zentrale Öffnung des Stampers versenkt wird.

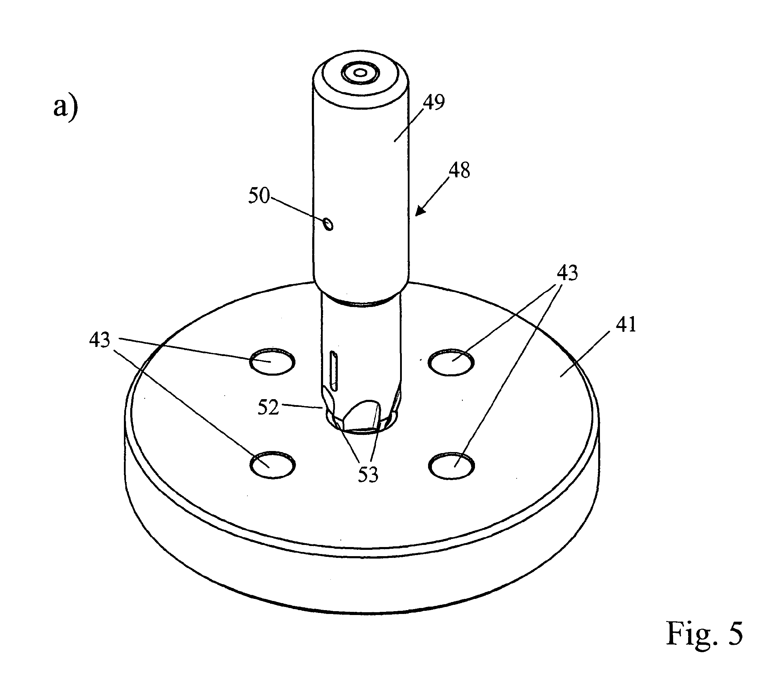

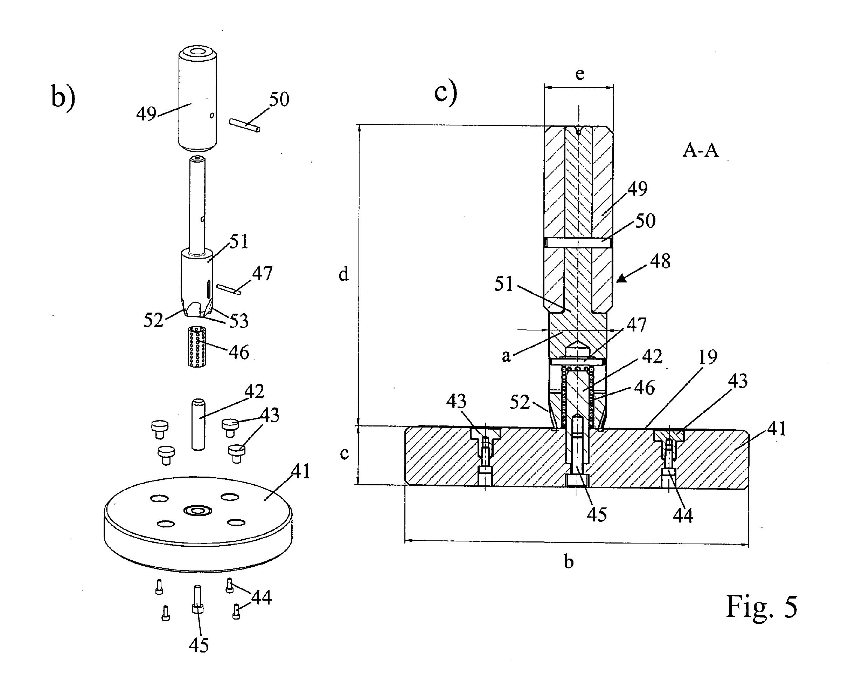

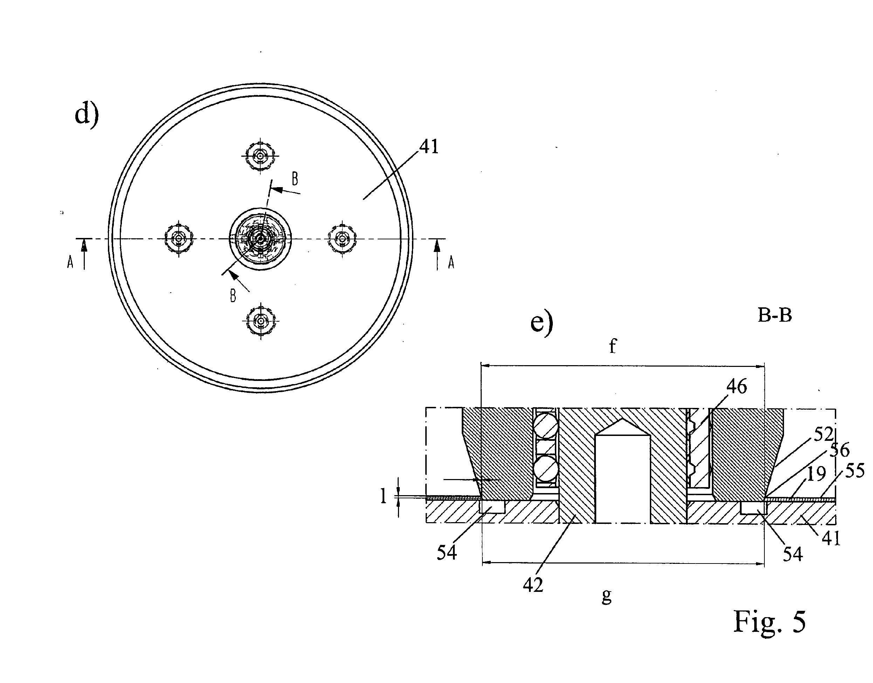

Ein besonders geeignetes Werkzeug für die erfindungsgemässe Nachbearbeitung des Stampers ist in Figur 5 im Detail dargestellt. Dabei zeigt Figur 5a) eine perspektivische Ansicht, Figur 5b) eine Explosionsdarstellung, Figur 5c) einen Schnitt gemäss A-A in Figur 5d), Figur 5d) eine Aufsicht auf die Schneidplatte 41 und Figur 5e) einen Schnitt gemäss B-B in Figur 5d). In Figur 5 sind in den unterschiedlichen Darstellungen mit den gleichen Bezugszeichen gleiche Bestandteile bezeichnet.

Die Vorrichtung gemäss Figur 5 ist dazu ausgelegt, einen Stamper 19, welcher bereits mit einer gestanzten zentralen Öffnung 56 versehen wurde, manuell nachzubearbeiten.

Dafür ist eine Schneidplatte 41 vorgesehen, welche im wesentlichen die Grösse des Stampers 19 aufweist. Um den Stamper 19 auf dieser Schneidplatte 41 zu befestigen, sind Magnete 43 in dieser Schneidplatte 41 eingelassen, wobei die Magnete 43 in durchgängigen Bohrungen mittels Schrauben 44 befestigt sind. Die Magnete 43 erlauben eine Befestigung, welche eine leichte Verschiebbarkeit zulassen. Es ist möglich, zusätzlich wenigstens abschnittsweise umlaufende Rillen oder Nuten o.ä. auf der Schneidplatte 41 vorzusehen, um eine Positionierung des Stampers 19 sicherzustellen.

In einer zentralen Bohrung der Schneidplatte ist zusätzlich eine Führungssäule 42 teilweise eingelassen und durch eine Schraube 45 von unten befestigt. Die Führungssäule 42 steht senkrecht zur Schneidplatte 41.

Der Stamper 19 wird auf die Schneidplatte 41 aufgesetzt, indem seine zentrale Öffnung 56 über die Führungssäule 42 gestülpt wird. Anschliessend wird das Schneidwerkzeug 48, welches an seiner Spitze über eine zentrale, und auf die Führungssäule 42 angepasste Bohrung aufweist, auf die Führungssäule 42 aufgesetzt und nach unten geführt. Das Schneidwerkzeug 48 ist um die Führungssäule 42 über einen Kugelkäfig 46 drehbar geführt. Es verfügt über einen zentralen Schneidkern 51, über welchen an seinem oberen Ende ein Handgriff 49 geführt und mit einem Stift 50 befestigt ist. Am unteren Ende verfügt der zentrale Schneidkern 51 über die bereits erwähnte zentrale Bohrung zur Aufnahme der Führungssäule 42, und der Kugelkäfig 46 ist in dieser zentralen Bohrung über einen Stift 47 befestigt. An der vorderen Spitze ist der Schneidkopf 52 ausgebildet, indem mehrere Schneidkanten 53, konkret gibt es davon hier sechs (es sind auch mehr denkbar und möglich), angeordnet sind. Der Schneidkopf 52 ist ähnlich zu einem Schneidkopf, wie er im Zusammenhang mit Kegelsenkern bekannt ist.

Die gewünschte Abschrägung 37 am Stamper 19 kann nun in sehr kontrollierter Weise manuell erzeugt werden, wenn das Schneidwerkzeug 48 unter Drehung und gleichzeitiger Materialabtragung in die zentrale Öffnung 56 eingeführt wird. Durch die Führungssäule 42 wird eine optimale Zentrierung und Führung gewährleistet, und gleichzeitig wird durch die Ausbildung der Spitze 52 und den Anschlag auf der Schneidplatte 41 sichergestellt, dass die Flanke 37 die gewünschte Tiefe k erhält.

Im Detail werden dabei z.B. folgende Dimensionierungen gewählt: Durchmesser der

Schneidplatte 41: b = 150 mm; Durchmesser des Schneidkerns 51: a = 25 mm; Höhe der Schneidplatte 41: c = 25 mm; Höhe des aufgesetzten Schneidwerkzeugs 48: d gleich 130 mm; Durchmesser des Handgriffes 49: e = 30 mm. Das Kontrollmass des Schneidkopfes 52 auf der Höhe 0.3 mm beträgt: f = 22.09; der Durchmesser an der Spitze vom Schneidkopf 52 beträgt: g = 21.99mm; die Tiefe der Fase beträgt: 1 = ca. 0.2 mm.

Zusammenfassend ergeben sich durch die Nachbearbeitung des Stampers 19 respektive bei der Verwendung des beschriebenen Werkzeugs unter anderem folgende Vorteile:

- Reduzierte Exzentrizität des Stampers zur Mittelachse des Werkzeugs

- weniger verdrängtes Material am Konus

- weniger Spannungen am Stamper

- verbessertes Bedrucken des Substrates im Übergangsbereich zwischen Stamperhalter und Stamper

- verbessertes fliessen des Kunststoffes über den Bereich Übergang von Stamperhalter zu Stamper

- selbstzentrierende Wirkung bei der Montage und beim Gebrauch

- Verbesserung des Prozesses für das Bonden der DVD Halbseiten.

BEZUGSZEICHENLISTE

| | |
|---|---|
| 10 | Spritzgusswerkzeug |
| 11,12 | Spiegelplatte (mirror block) |
| 13,14 | Zentrierring (centering ring) |
| 15 | Stanze (punch) |
| 16 | Ausstosshülse (ejector sleeve) |
| 17 | Angussbuchse (sprue bush) |
| 18 | Stamperhalter (stamper holder) |
| 19 | Stamper |
| 20 | Formring (form or venting ring) |
| 21 | Gleitlager, Kugelkäfig |
| 22 | Anguss |
| 23 | Angussausstosser |
| 24 | Betätigungselement (Formring) |
| 25 | Kavität |
| 26 | Führungssäulen |
| 27 | Kugelkäfig |
| 28 | Kupplungselement für Spritzgussmasse |
| 29 | Medienzuführungsleitung |
| 30 | Vakuumkanal in 12 |
| 31 | Ansaugöffnungen |
| 32 | Schlitz |
| 33 | Haltelippe |
| 34 | Erhöhung |
| 35 | Abschrägung an 18 |
| 36 | aufgeworfenes Material von 19 |
| 37 | Fase, konische Abschrägung an 19 |
| 41 | Schneidplatte |
| 42 | Führungssäule |
| 43 | Flachmagnet |
| 44 | Schraube |
| 45 | Schraube |
| 46 | Kugeläfig |
| 47 | Zylinderstift |
| 48 | Schneidwerkzeug |
| 49 | Handgriff |
| 50 | Zylinderstift |
| 51 | Schneidkern |

| 52 | Schneidkopf |
| 53 | Schneidkante |
| 54 | umlaufende Rinne |
| 55 | Oberfläche von 19 mit Struktur respektive Information |
| 56 | Öffnung in den 19 |
| 57 | Oberfläche von 19 ohne Struktur respektive Information |
| a | unterer Durchmesser von 51 |
| b | Durchmesser von 41 |
| c | Dicke von 41 |
| d | Höhe von 48 |
| D | Aussendurchmesser des Stamperhalters |
| e | oberer Durchmesser von 48 |
| f | Kontrollmass auf Höhe 0.3 |
| g | Durchmesser bei Spitze von 52 |
| h | Dicke von 19 |
| i | Differenz der Radien von f und g |
| k | Tiefe von 35 |
| 1 | minimale Höhe im Toleranzbereich |
| n | Weite der Abschrägung 37 |

**Patentansprüche**

1. Verfahren zur Bearbeitung eines scheibenförmigen Informations- und/oder Strukturträgers (19) für Spritzgussformen (10), welcher eine zentrale, im wesentlichen zylindrische Öffnung (56) aufweist, wobei der Informations-und/oder Strukturträger (19) in der Spritzgussform (10) durch eine durch die Öffnung (56) wenigstens teilweise hindurchtretende Haltevorrichtung (18) gehalten wird, und bei welchem die Information respektive Struktur im wesentlichen konzentrisch zu dieser Öffnung (56) auf einer der Kavität (25) der Spritzgussform (10) zugewandten Oberfläche (55) vorgesehen ist,
**dadurch gekennzeichnet, dass**
die im wesentlichen zylindrische Öffnung (56) auf wenigstens einer Seite an der Kante zu einer Oberfläche (55, 57) abgefast (35) wird.

2. Verfahren nach Anspruch 1, **dadurch gekennzeichnet, dass** durch Materialabtragung umlaufend oder abschnittsweise abgefast wird.

3. Verfahren nach Anspruch 2, **dadurch gekennzeichnet, dass** eine Fase (35) an der Kante zwischen der zylindrischen Öffnung (56) und der die Information respektive Struktur tragenden Oberfläche (56) erzeugt wird.

4. Verfahren nach Anspruch 3, **dadurch gekennzeichnet, dass** es sich beim Informations-und/oder Strukturträger (19) um einen Stamper (19) für die Herstellung eines optischen Datenträgers, insbesondere einer CD oder DVD, handelt, und dass es sich bei der Spritzgussform (10) um ein Spritzgusswerkzeug für die Herstellung von scheibenförmigen Informationsträgern, insbesondere in Form von CDs und/oder DVDs, handelt, welches Spritzgusswerkzeug (10) zur Bildung einer Kavität (25) eine erste und eine zweite Spiegelplatte (11 bzw. 12) umfasst, die einander gegenüberliegen und zum Öffnen und Schliessen der Form relativ zueinander beweglich sind, sowie einen Formring (20), welcher die erste Spiegelplatte (11) konzentrisch umschliesst und die Kavität (25) zum äusseren Rand hin abschliesst und relativ zur ersten Spiegelplatte (11) beweglich ist.

5. Verfahren nach Anspruch 4, **dadurch gekennzeichnet, dass** der Stamper (19) eine Dicke (h) im Bereich von 0.2-0.5 mm, vorzugsweise im Bereich von 0.25-0.35 mm aufweist, und bevorzugtermassen aus Nickel oder einer Nickellegierung gefertigt ist.

6. Verfahren nach Anspruch 5, **dadurch gekennzeichnet, dass** die Fase (35) umlaufend abgefast wird und mit der Normalen zum Stamper (19) einen Winkel von 5 - 60°, vorzugsweise von 7-20°, und insbesondere bevorzugt von 10-15° einschliesst.

7. Verfahren nach einem der Ansprüche 5 oder 6, **dadurch gekennzeichnet, dass** die Tiefe (k) der Fase (35) im Bereich von 0.1-0.3, vorzugsweise im Bereich von 0.15-0.25 mm liegt, und insbesondere bevorzugt das Verhältnis von Tiefe (k) der Fase (35) zu Dicke (h) des Stampers (19) im Bereich von 0.1-0.9, bevorzugt von 0.25-0.5, und insbesondere bevorzugt von 0.6-0.7 liegt.

8. Verfahren nach einem der vorhergehenden Ansprüche, **dadurch gekennzeichnet, dass** vorgängig zum Abfasen die Öffnung (56) in einem Stanzprozess erzeugt wird.

9. Verfahren nach einem der vorhergehenden Ansprüche, **dadurch gekennzeichnet, dass** das Abfasen geschieht, indem ein Schneidkopf (52), mit mehreren im wesentlichen konisch angeordneten Schneidkanten (53), insbesondere in Form eines Kegelsenkers (52), oder mit einer konischen Schleifoberfläche konzentrisch und kontrolliert in die Öffnung (56) des Struktur- und/oder Informationsträgers (19) bis zu einem definierten Anschlag geführt wird, und **dadurch** die Fase (35) durch Materialabtragung erzeugt wird, wobei insbesondere bevorzugt die Materialabtragung manuell erfolgt.

10. Verfahren nach Anspruch 9 unter Verwendung einer Vorrichtung nach einem der Ansprüche 11-16.

11. Vorrichtung zur Bearbeitung eines scheibenförmigen Informations- und/oder Strukturträgers (19) für Spritzgussformen (10), welcher Informations- und/oder Strukturträger (19) eine zentrale, im wesentlichen zylindrische Öffnung (56) aufweist, wobei der Informations- und/oder Strukturträger (19) dazu vorgesehen ist, in der Spritzgussform (10) durch eine durch die Öffnung (56) wenigstens teilweise hindurchtretende Haltevorrichtung (18) gehalten zu werden, und bei welchem Informations- und/oder Strukturträger (19) die Information respektive Struktur im wesentlichen konzentrisch zu dieser Öffnung (56) auf einer der Kavität (25) der Spritzgussform (10) zugewandten Oberfläche (55) vorgesehen ist, **dadurch gekennzeichnet, dass** erste Mittel (41, 43) zur kontrollierten Halterung des Informations- und/oder Strukturträgers (19) angeordnet sind, und dass ein Schleif- und/oder Schneidwerkzeug (48) angeordnet ist, welches über zweite Mittel (42, 46) konzentrisch in die zentrale Öffnung (56) des gehaltenen Informations- und/oder Strukturträgers geführt werden kann, und wobei über eine Drehung des Schleif- und/oder Schneidwerkzeugs (48) die im wesentlichen zylindrische Öffnung (56) auf wenigstens einer Seite an der Kante zu einer Oberfläche (55, 57) abgefast (35) werden kann.

**12.** Vorrichtung nach Anspruch 11, **dadurch gekennzeichnet, dass** es sich bei den ersten Mitteln (41, 43) um eine Schneidplatte (41) handelt, in welcher Haltungsmittel (43) für den Informations- und/oder Strukturträger (19) angeordnet sind, wobei es sich bei diesen Halterungsmitteln (43) insbesondere bevorzugt um Magnete (43) und/oder Positionierungsrippen und/oder Vakuumansaugvorrichtungen handelt.

**13.** Vorrichtung nach einem der Ansprüche 11 oder 12, **dadurch gekennzeichnet, dass** es sich bei den zweiten Mitteln (42, 46) um eine mit den ersten Mitteln (41) fest oder drehbar verbundene, durch die zentrale Öffnung (56) konzentrisch hindurchtretende, senkrecht zur Ebene des Informations- und/oder Strukturträgers (19) angeordnete Führungssäule (42) handelt, und dass das Schleif- und/oder Schneidwerkzeug (48) über eine entsprechende im wesentlichen zylindrische Ausnehmung oder Bohrung in der Spitze verfügt, in welche die Führungssäule (42), gegebenenfalls unter Zwischenschaltung von die Reibung vermindernden Lagern (46), bevorzugt in Form eines Kugelkäfigs (46), derart eingeführt ist, dass das Schleif- und/oder Schneidwerkzeug (48) konzentrisch zur zentralen Öffnung (56) drehbar ist.

**14.** Vorrichtung nach einem der Ansprüche 11 oder 12, **dadurch gekennzeichnet, dass** es sich bei den zweiten Mitteln (42, 46) um eine mit dem Schleif- und/oder Schneidwerkzeug (48) fest oder drehbar und koaxial verbundene, durch die zentrale Öffnung (56) konzentrisch hindurchtretende Führungssäule handelt, und dass das erste Mittel über eine entsprechende im wesentlichen zylindrische, senkrecht zur Ebene des Informations- und/oder Strukturträgers (19) angeordnete Ausnehmung oder Bohrung verfügt, in welche die Führungssäule (42), gegebenenfalls unter Zwischenschaltung von die Reibung vermindernden Lagern (46), bevorzugt in Form eines Kugelkäfigs (46), derart eingeführt ist, dass das Schleif- und/oder Schneidwerkzeug (48) konzentrisch zur zentralen Öffnung (56) drehbar ist

**15.** Vorrichtung nach einem der Ansprüche 11-14, **dadurch gekennzeichnet, dass** es sich beim Schneidwerkzeug (48) um einen Kegel- und/oder Entgratersenker handelt, welcher insbesondere bevorzugt über wenigstens drei, vorzugsweise drei bis acht Schneiden (53) verfügt.

**16.** Vorrichtung nach einem der Ansprüche 11-15, **dadurch gekennzeichnet, dass** das Schleif- und/oder Schneidwerkzeug (48) zur manuellen Betätigung für die Materialabtragung am Stamper (19) ausgelegt ist.

Fig. 1

a)

b)

c)

Fig. 2

EP 1 686 576 A2

Fig. 3

EP 1 686 576 A2

Fig. 4

EP 1 686 576 A2

a)

Fig. 5

Fig. 5

A-A

c)

b)

d)

41

B

A ———— A

B

e)

B-B

f

46

52
56
55
19

1

54

42

54
41

g

Fig. 5